(19) Europäisches Patentamt
European Patent Office
Office européen des brevets

(11) Numéro de publication : **0 115 233**
**B1**

(12) **FASCICULE DE BREVET EUROPÉEN**

(45) Date de publication du fascicule du brevet : **30.09.87**

(51) Int. Cl.[4] : **C 08 F 10/02**, C 08 F 4/62, C 08 F 2/38

(21) Numéro de dépôt : **83402479.6**

(22) Date de dépôt : **20.12.83**

# (54) Procédé continu perfectionné de fabrication d'homopolymères ou de copolymères de l'éthylène.

(30) Priorité : **24.12.82 FR 8221737**

(43) Date de publication de la demande : **08.08.84 Bulletin 84/32**

(45) Mention de la délivrance du brevet : **30.09.87 Bulletin 87/40**

(84) Etats contractants désignés : **AT BE CH DE FR GB IT LI LU NL SE**

(56) Documents cités :
**DE-A- 2 841 646**
**FR-A- 1 267 771**
**FR-A- 1 268 693**
**FR-A- 1 358 111**
**FR-A- 2 302 305**
**FR-A- 2 385 745**
**GB-A- 884 116**
**Le dossier contient des informations techniques présentées postérieurement au dépôt de la demande et ne figurant pas dans le présent fascicule.**

(73) Titulaire : **Société Chimique des Charbonnages S.A.**
**Tour Aurore Place des Reflets**
**F-92080 Paris La Défense 2 Cedex 5 (FR)**

(72) Inventeur : **Bujadoux, Karel**
**31 Avenue Van Pelt**
**F-62300 Lens (FR)**
Inventeur : **Machon, Jean-Pierre**
**83 rue Delisse-Engrand**
**F-62400 Bethune (FR)**
Inventeur : **Biechlin, Serge**
**Chemin du Bois Fresnicourt**
**F-62150 Houdain (FR)**

(74) Mandataire : **Dubost, Thierry**
**SOCIETE CHIMIQUE DES CHARBONNAGES Service Propriété Industrielle B.P. 57**
**F-62670 Mazingarbe (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 115 233 B1

Jouve, 18, rue St-Denis, 75001 Paris, France

**Description**

La présente invention concerne un procédé continu perfectionné de fabrication d'homopolymères ou de copolymères de l'éthylène.

Il est connu par le brevet français n° 2 202 899 d'homopolymériser l'éthylène et de copolymériser l'éthylène avec au moins une α-oléfine, en continu, en présence d'un système catalytique de type Ziegler à température élevée et sous pression élevée.

L'installation utilisée comprend au moins un réacteur comprenant au moins une zone réactionnelle, au moins un séparateur, des circuits de recyclage de l'éthylène et, le cas échéant, des α-oléfines (ci-après les monomères) n'ayant pas réagi vers un compresseur secondaire recevant d'autre part les monomères frais d'un compresseur primaire, et qui alimente le réacteur sous la pression de (co)polymérisation choisie.

Dans ce type de procédé des traces des composants du système catalytique peuvent être entraînées avec les gaz. Cet entraînement peut provoquer, d'une part, une poursuite de la (co)polymérisation avant et pendant la séparation du (co)polymère formé d'avec les monomères n'ayant pas réagi et une diminution de la masse moléculaire moyenne du (co)polymère formé que l'on recueille dans le séparateur. La poursuite de la (co)polymérisation dans la conduite reliant le réacteur au séparateur et dans le séparateur est très gênante car elle oblige à modifier le réglage des paramètres de fonctionnement du réacteur de manière aléatoire. Il en est de même pour le séparateur dans lequel la (co)polymérisation peut se poursuivre provoquant l'apparition d'un gradient thermique entre ses parties haute et basse. Il est évidemment très difficile, dans ces conditions, d'obtenir un (co)polymère ayant les caractéristiques souhaitées. L'entraînement des traces des composants du système catalytique peut provoquer, d'autre part, une (co)polymérisation des monomères recyclés dans les circuits de recyclage suivant le séparateur. Il se forme ainsi des (co)polymères généralement de très basse masse moléculaire (inférieur à 2 000) ayant, dans les conditions ordinaires de température et de pression, l'aspect d'huiles, de graisses ou de cires. Des pièges sont généralement prévus sur les circuits de recyclage de façon à y recueillir ces (co)polymères de très basse masse moléculaire. Cependant ces (co)polymères peuvent aussi se déposer sur la paroi intérieure des conduites de recyclage et leur masse moléculaire peut augmenter par suite du passage continu des gaz de recyclage contenant des traces des composants du système catalytique. Alors que les polymères de très basse masse moléculaire sont peu gênants car faciles à éliminer, les (co)polymères de plus haute masse moléculaire (supérieure à 2 000) sont très gênants et peuvent entraîner une perte de charge dans l'installation et même conduire au bouchage des conduites de recyclage.

On a déjà décrit dans le brevet français n° 2 302 305 un procédé de (co)polymérisation selon lequel on injecte, en fin de réaction, au moins un produit choisi parmi les sels métalliques alcalins ou alcalino-terreux des acides carboxyliques, la quantité injectée étant suffisante pour provoquer la désactivation du catalyseur, de préférence des deux constituants du catalyseur (dérivé de métal de transition et activateur). L'injection du sel métallique a lieu de préférence le plus près possible de la vanne de sortie du réacteur. Ce procédé antérieur n'est, malgré tout, pas entièrement satisfaisant car le gradient thermique apparaissant dans le séparateur, bien que légèrement diminué, est encore trop élevé. D'autre part le taux de butène-2 formé par isomérisation du butène-1 est trop important. Le butène-2 est particulièrement gênant car, ne copolymérisant pas avec l'éthylène et les α-oléfines, il s'accumule dans les gaz recyclés.

On connaît également par les brevets français n° 1 267 771 et 1 268 693 des procédés de préparation, sous basse pression et à basse température, de polymères d'hydrocarbures vinyliques dans lesquels on utilise un catalyseur comprenant, outre un composé organique d'un métal des groupes IA à IIIA, un composé organique d'un métal du groupe IIB (Zn, Cd, Hg, Mg), qui remplit la fonction de co-activateur.

On connaît également par le brevet allemand n° 2 841 646 un procédé pour l'interruption et le redémarrage de la (co)polymérisation des oléfines sous basse pression et à basse température, consistant à ajouter au moins 0,5 millimoles de CO ou, de préférence, $CO_2$ par litre de mélange réactionnel. Ce procédé est appliqué à une (co)polymérisation en présence d'un système catalytique comprenant d'une part un trichlorure de titane modifié par un donneur d'électrons et d'autre part un chlorodialkylaluminium. Le redémarrage de la polymérisation étant possible selon ce document, on constate que, dans les conditions décrites, l'oxyde de carbone n'est pas un désactivateur du catalyseur.

La présente invention a pour but de remédier à ces inconvénients en proposant un procédé qui provoque l'interruption de la croissance des polymères formés en fin de réaction et dans les circuits de recyclage des gaz. En particulier ce procédé permet une meilleure maîtrise du séparateur dans lequel le gradient de température est considérablement diminué, voire annulé. Il permet d'éviter la formation de polymères de haute masse moléculaire dans les circuits de recyclage, et par conséquent une augmentation de la perte de charge dans lesdits circuits. Il permet également une réduction importante de l'isomérisation du butène-1 en butène-2.

La présente invention a pour objet un procédé continu de fabrication d'homopolymères de l'éthylène ou de copolymères de l'éthylène avec au moins une α-oléfine comportant de 3 à 8 atomes de carbone, comprenant successivement :

a) une première étape de (co)polymérisation de l'éthylène à une température comprise entre 180 et 320 °C, sous une pression comprise entre 300 et 2 500 bars, en présence d'un système catalytique comprenant d'une part au moins un composé halogéné de métal de transition des groupes IVa à VIa de la Classification Périodique et d'autre part au moins un activateur choisi parmi les hydrures et les composés organo-métalliques des métaux des groupes I à III de la Classification Périodique, le rapport molaire de l'activateur au composé de métal de transition étant compris entre 1 et 10,

b) une seconde étape de séparation du (co)polymère formé d'avec le(s) monomère(s) n'ayant pas réagi, sous une pression comprise entre 100 et 500 bars,

c) une troisième étape de recyclage de(s) monomère(s) n'ayant pas réagi, et

d) une quatrième étape de recompression jusqu'à la pression de (co)polymérisation,

caractérisé en ce qu'on introduit dans le milieu réactionnel, en fin de première étape, au moins un composé capable de réduire le métal ou les métaux de transition du système catalytique.

L'α-oléfine comportant de 3 à 8 atomes de carbone est choisie parmi le propylène, le butène-1, le pentène-1, l'hexène-1, les méthyl-pentènes-1, l'heptène-1, l'octène-1 et leurs mélanges.

On utilise avantageusement le propylène, le butène-1, l'hexène-1, les mélanges de propylène et de butène-1, de butène-1 et d'hexène-1.

La première étape de (co)polymérisation de l'éthylène est mise en œuvre dans au moins un réacteur comportant au moins une zone réactionnelle. On peut utiliser un ou des réacteurs autoclaves et/ou tubulaires. Afin de contrôler avec précision l'indice de fluidité du (co)polymère formé, il peut être avantageux d'effectuer la (co)polymérisation en présence de jusqu'à 2 % en moles d'un agent de transfert de chaînes, tel que l'hydrogène.

Le système catalytique utilisé comprend d'une part au moins un composé halogéné de métal de transition des groupes IVa à VIa de la Classification Périodique qui peut être :

— du chlorure de titane violet $TiCl_3$, 1/3 $AlCl_3$,

— un composé de formule $(TiCl_a)\ (MgCl_2)_y\ (AlCl_3)_z\ (RMgCl)_b$ dans laquelle $2 \leq a \leq 3$, $y \geq 2$, $0 \leq z \leq 1/3$ et $0 \leq b \leq 1$, seul ou en mélange avec un composé de formule $TiCl_3\ (AlCl_3)_w\ (E,\ TiCl_4)_x$ dans laquelle $0 \leq w \leq 1/3$, $0 \leq x \leq 0{,}03$ et E est un éther diisoamylique ou di n-butylique,

— le produit obtenu par mise en contact d'un composé complexe de magnésium comportant au moins un composé choisi parmi les monohalogénures de magnésium et les hydrures d'halogénomagnésium, et d'un halogénure de titane ou de vanadium dans lequel le métal a une valence non supérieure à 3,

— un composé de formule $(MX_a)\ (MgX_2)_b\ (RMgX)_c\ (HMgX)_d$, dans laquelle M est un métal du groupe IVa ou Va de la Classification Périodique, X est un halogène, R est un radical hydrocarboné et $2 \leq a \leq 3{,}5$, $1 \leq b \leq 30$, $1 < c \leq 8$ et $0 \leq d \leq 10$,

— un composé de formule $(TiCl_3,\ 1/3\ AlCl_3)\ (MCl_3)_x\ (MgX_2)_y$ dans laquelle M est un métal de transition des groupes Va et VIa de la Classification Périodique, X est un halogène, $0{,}3 \leq x \leq 3$ et $0 \leq y \leq 20$,

— un composé formé de cristaux mixtes contenant $TiCl_3$ (ou $TiCl_2$), $AlCl_3$ et d'autres chlorures métalliques tels que $FeCl_2$, $NiCl_2$, $MoCl_3$, $MgCl_2$,

— un composé de formule $(MX_3)\ (\emptyset_n\ SiL_{4-n})_b$ dans laquelle M est un métal de transition des groupes IVa à VIa de la Classification Périodique, Ø est un noyau aromatique ou polyaromatique éventuellement substitué ayant de 6 à 15 atomes de carbone, L est soit un atome d'halogène, soit un groupe hydroxyle et $1 \leq n \leq 3$, $0{,}2 \leq b \leq 2$, ledit composé étant le cas échéant associé à $AlCl_3$, $MgCl_2$ et/ou un halogénure de métal du groupe VIII,

— un composé de formule $X_{m-n}\ M(OR)_n$ dans laquelle M représente un ou plusieurs métaux des groupes Ia, IIa, IIb, IIIb et VIIa de la Classification Périodique, X est un radical inorganique monovalent, R est un radical hydrocarboné monovalent, m est la valence de M et $1 \leq n \leq m$, mis en présence d'un dérivé halogéné d'un métal de transition des groupes IVa à VIa.

Le système catalytique comprend d'autre part au moins un activateur choisi parmi les hydrures et les composés organo-métalliques des métaux des groupes I à III de la Classification Périodique, et qui peut être :

— un alkylaluminium, comme le triéthylaluminium, le tributylaluminium, le triisobutylaluminium, le trioctylaluminium,

— un chlorodialkylaluminium comme le chlorodiéthylaluminium,

— un dichloroalkylaluminium comme le dichloroéthylaluminium,

— un alkylsiloxalane de formule

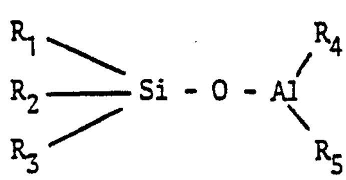

,

$R_1$, $R_2$, $R_3$, $R_4$ étant des radicaux hydrocarbonés ayant de 1 à 10 atomes de carbone et $R_5$ étant soit un radical hydrocarboné ayant de 1 à 10 atomes de carbone, soit un radical du type

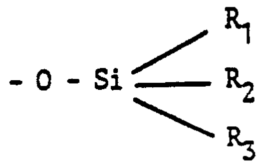

— un composé à base de fluorure d'alkylaluminium et ayant pour formules $(AlR_2F)\ (AlR_2X)_a$ ou bien $(AlR_2F)\ (AlR_2H)_b\ (AlR_3)_c$, dans lesquelles R est un groupe alkyle ayant de 1 à 12 atomes de carbone, X un halogène autre que le fluor, $0,1 \leq a \leq 0,4$, $0,1 \leq b \leq 0,4$ et $0,05 \leq c \leq 0,2$.

Le système catalytique peut être déposé sur un support inerte comprenant, par exemple, un ou plusieurs des composés suivants : $MgCl_2$, $Al_2O_3$, $MoO_3$, $MnCl_2$, $SiO_2$, MgO.

Avantageusement, le composé capable de réduire le métal ou les métaux de transition du système catalytique est choisi parmi les dérivés organolithiens, organomagnésiens, organozinciques, organocadmiens, organomercuriques et l'oxyde de carbone.

Par fin de première étape on doit entendre un moment où la (co)-polymérisation est totalement ou presque complètement achevée. Ainsi le composé choisi peut être introduit dans une des dernières zones réactionnelles (de préférence la dernière zone) du réacteur ou de l'ensemble de réacteurs, ou bien encore entre la sortie de ladite dernière zone réactionnelle et la vanne de détente, ou encore entre ladite vanne de détente et l'entrée du séparateur.

L'introduction peut avoir lieu éventuellement en plusieurs de ces endroits et peut se faire par tout moyen approprié, tel qu'une pompe à haute pression, le composé choisi étant injecté à l'état pur ou en solution ou émulsion dans un solvant inerte tel un hydrocarbure saturé.

Le flux molaire du composé introduit est avantageusement compris entre 0,2 et 6 fois le flux molaire du métal ou des métaux de transition du système catalytique.

A titre de dérivé organolithien, on peut utiliser le méthyllithium, l'éthyllithium, le n-propyllithium, l'isopropyllithium, les butyllithiums normal, secondaire et tertiaire, le phényllithium.

A titre de dérivé organomagnésien, on peut utiliser un composé organomagnésien mixte de formule générale R-Mg-X dans laquelle R est un radical hydrocarboné aliphatique, cycloaliphatique ou aromatique ou un radical alkylaryle ou arylalkyle, comportant de 1 à 8 atomes de carbone, et dans laquelle X est un radical halogéné tel que F, Cl, Br ou I. On citera par exemple le chlorure, le bromure et l'iodure de méthylmagnésium, le chlorure et le bromure d'éthylmagnésium, le chlorure de n- et d'iso-propylmagnésium, les chlorures et bromures de n-, iso-, secondaire- ou tertio-butylmagnésium, les chlorure et bromure de n-pentyl, n-hexyl, n-heptyl et n-octylmagnésium, les chlorures de cyclopentyl- et de cyclohexyl-magnésium, le chlorure et le bromure de phénylmagnésium, le bromure de tolylmagnésium, le chlorure de benzylmagnésium, le bromure de vinylmagnésium, le chlorure et le bromure d'allylmagnésium. On peut utiliser également un composé organomagnésien vrai de formule générale R-Mg-R' dans laquelle chacun des radicaux R et R', identiques ou différents a la signification donnée ci-dessus pour le radical R du composé organomagnésien mixte. A titre d'exemple on peut utiliser le diméthylmagnésium, le diphénylmagnésium, le dibutylmagnésium, le di-n-hexylmagnésium, le n-butyléthylmagnésium.

A titre de dérivé organozincique, on peut utiliser le diméthylzinc, le diéthylzinc, le di-n-propylzinc, le di-n-butylzinc, le diphénylzinc, le di-orthotolylzinc.

A titre de dérivé organocadmien, on peut utiliser le diméthylcadmium, le diéthylcadmium, le dipropylcadmium, le dibutylcadmium, le di-isobutylcadmium, le di-iso-amylcadmium.

A titre de dérivé organomercurique, on peut utiliser un composé de formule générale R-Hg-X dans laquelle R est un radical méthyle, éthyle, propyle, butyle, amyle, hexyle, phényle, tolyle ou naphtyle et X est le chlore, le brome ou l'iode, ou bien on peut utiliser un composé de formule générale R-Hg-R' dans laquelle R et R' sont généralement identiques et sont choisis parmi les radicaux méthyle, éthyle, propyle, butyle, amyle, hexyle, phényle, tolyle, biphényle, benzyle, naphtyle.

Les dérivés organométalliques sont généralement utilisés à l'état de solution.

L'oxyde de carbone peut être utilisé à l'état pur ou bien dilué dans un gaz inerte, tel l'azote, ou bien à l'état de solution pressurisée dans un hydrocarbure.

L'introduction d'au moins un composé tel que défini ci-dessus dans le milieu réactionnel, en fin de première étape, procure le grand avantage d'interrompre rapidement la réaction de (co)polymérisation et d'éviter la diminution de la masse moléculaire moyenne des (co)polymères formés.

On constate en particulier l'absence de gradient de température dans le séparateur ou sa très forte diminution.

De façon à améliorer encore le résultat obtenu, et particulièrement à éviter totalement la formation de polymères dans les conduites de recyclage suivant le séparateur, le procédé selon l'invention est secondairement caractérisé en ce qu'on introduit, en outre, lors de la 2[e] et/ou de la 3[e] étape, dans le courant de monomère(s) recyclé(s) et, le cas échéant, de (co)polymères formés au moins un composé choisi parmi :

— les amides des acides organiques saturés ou insaturés comprenant de 12 à 22 atomes de carbone,
— les polyalkylènepolyols comprenant de 4 à 500 atomes de carbone,
— les composés comportant au moins 2 fonctions époxyde.

Par introduction lors de la 2ᵉ étape il faut comprendre que le composé choisi est introduit soit juste avant soit pendant l'étape de séparation, dans tous les cas dans le milieu réactionnel se trouvant à la pression de séparation.

Par introduction lors de la 3ᵉ étape, on entend que le composé choisi est introduit après l'étape de séparation et avant l'étape de recompression des gaz, avantageusement avant le passage des gaz dans les pièges froids.

Les amides des acides organiques saturés utilisables selon l'invention sont par exemple le lauramide, le myristamide, le palmitamide, le stéaramide, l'arachidamide. Les amides des acides organiques insaturés utilisables selon l'invention sont par exemple l'oléamide, l'élaïdamide, l'érucamide, le brassidamide. Les polyalkylènepolyols utilisables selon l'invention sont par exemple les polyéthylèneglycols de masse moléculaire comprise entre 200 et 10 000, les polypropylèneglycols de masse moléculaire comprise entre 250 et 4 000, les cotélomères poly(éthylène-propylène) glycols, et leurs mélanges. Les composés comportant au moins deux fonctions époxyde utilisables selon l'invention sont notamment l'huile de soja époxydée, les dérivés époxydiques d'esters d'acides organiques polyinsaturés, les dérivés époxydiques de composés à plusieurs noyaux aromatiques, tel le diglycidyléther du bisphénol A.

La quantité de composé introduit lors de la 2ᵉ et/ou de la 3ᵉ étape est avantageusement comprise entre 0,001 et 0,1 mole par tonne de monomère(s) recyclé(s).

On décrira maintenant en détail une installation de (co)polymérisation pour la mise en œuvre du procédé selon l'invention, schématisée sur la figure unique en annexe. On a représenté en (1) le réacteur de polymérisation, (2) la vanne de détente du réacteur, (3) le séparateur sous moyenne pression, (11) une trémie de séparation sous basse pression, (4) un cyclone standard monté sur un décanteur (5), (6) un réfrigérant, (7) un second décanteur, (8) le compresseur secondaire, (9) le compresseur primaire et (10) la conduite d'arrivée de(s) monomère(s) frais.

Les points d'injection du ou des composés introduits dans le milieu réactionnel en fin de première étape sont repérés (C), (D) et (E).

Le point d'injection du ou des composés éventuellement introduits au cours de la 2ᵉ étape est repéré (E).

Les points d'injection du ou des composés éventuellement introduits au cours de la 3ᵉ étape sont repérés (A) et (B).

Les exemples non limitatifs suivants ont pour but d'illustrer l'invention.

## Exemple 1 (comparatif)

L'installation utilisée est schématisée sur la figure en annexe (décrite précédemment). Elle comprend un réacteur (1) autoclave à 3 zones dont les températures de fonctionnement sont respectivement de 210, 260 et 280 °C. On copolymérise dans ce réacteur, sous une pression de 800 bars, un mélange de 60 % en poids d'éthylène et 40 % en poids de butène-1, en présence du système catalytique ($TiCl_3$, 1/3 $AlCl_3$, $VCl_3$)/3$(C_2H_5)_3Al$ introduit dans les deux premières zones réactionnelles, et en présence de 0,1 % en moles d'hydrogène de manière à obtenir un copolymère d'indice de fluidité (mesuré selon la norme ASTM D 1238-73) compris entre 1 et 1,5 dg/min. Le temps de séjour moyen du système catalytique dans le réacteur est de 40 secondes. Le séparateur fonctionne normalement sous une pression de 250 bars.

On a rassemblé dans le tableau ci-après, les résultats obtenus :

$\Delta T$ est le gradient de température entre le haut et le bas du séparateur (3), exprimé en °C,

TB2 est le taux de butène-2, en % en poids, contenu dans les gaz de recyclage, la prise d'essai de gaz étant effectuée à la sortie du décanteur (7).

On observe une difficulté à purger le décanteur (7) et, très rapidement, une très forte augmentation de la perte de charge entre la sortie du séparateur (3) et l'aspiration du compresseur secondaire (8).

## Exemples 2 et 3

L'installation et les conditions de (co)polymérisation sont les mêmes qu'à l'exemple 1.

On introduit au point d'injection (C) le composé également indiqué au tableau à raison de 1 mole par atomegramme de titane + vanadium contenu dans le système catalytique utilisé. Le butyllithium est injecté à l'état de solution à 1 mole/litre dans l'heptane, et l'oxyde de carbone en solution dans le méthylcyclohexane. La température de la 3ᵉ zone réactionnelle diminue d'environ 15 °C.

Le décanteur (7) est moins difficile à purger qu'à l'exemple 1 et on ne constate pas d'augmentation importante de la perte de charge entre la sortie du séparateur (3) et l'aspiration du compresseur secondaire (8).

## Exemple 4 (comparatif)

L'installation et les conditions de la (co)polymérisation sont les mêmes qu'à l'exemple 1.

Suivant l'enseignement du brevet français n° 2 302 305, on injecte au point (C) du stéarate de calcium, à raison de 1 mole par atomegramme de titane + vanadium. La température de la 3e zone réactionnelle diminue d'environ 10 °C. Les résultats obtenus figurent au tableau ci-après.

Exemple 5

L'installation et les conditions de (co)polymérisation sont les mêmes qu'à l'exemple 1.

On introduit au point d'injection (C) une solution à 1 mole/litre de butyllithium dans l'heptane, à raison de 1 mole de butyllithium par atomegramme de titane + vanadium contenu dans le système catalytique. La température de la 3e zone réactionnelle est diminuée de 15 °C.

On introduit d'autre part en chacun des points d'injection (E), (A) et (B), 0,027 mole de stéaramide par tonne de mélange éthylène + butène-1 contenu dans les gaz de recyclage. Le stéaramide est utilisé en solution à 50 g/l dans l'huile de paraffine.

Les résultats suivants sont obtenus :

Le taux de butène-2 contenu dans les gaz de recyclage prélevés à la sortie du décanteur (7) est égal à 1,5 %.

Les graisses recueillies dans le cyclone (4) et dans le décanteur (7) ont, respectivement, un indice de fluidité mesuré selon la norme ASTM D 1238-73 égal à 50 et 40 dg/min.

La perte de charge entre la sortie du séparateur (3) et l'aspiration du compresseur secondaire (8) qui, à l'origine est de 35 bars, reste à 35 bars après 50 heures, puis augmente très légèrement à 40 bars après 100 heures et 50 bars après 200 heures de fonctionnement continu.

Enfin le gradient thermique entre le haut et le bas du séparateur (3) est nul.

Tableau

| Exemple | Composé | quantité | Δ T °C | TB2 |
|---|---|---|---|---|
| 1 | - | - | 25 | 6 |
| 2 | Oxyde de carbone | 0,25 | 0 | 0,5 |
| 3 | Butyllithium | 1,25 | 0 | 2 |
| 4 | Stéarate de calcium | 1 | 18 | 5 |

**Revendications**

1. Procédé continu de fabrication d'homopolymères de l'éthylène ou de copolymères de l'éthylène avec au moins une α-oléfine comportant de 3 à 8 atomes de carbone, comprenant successivement :

a) une première étape de (co)polymérisation de l'éthylène, à une température comprise entre 180 et 320 °C, sous une pression comprise entre 300 et 2 500 bars, en présence d'un système catalytique comprenant d'une part au moins un composé halogéné de métal de transition des groupes IVa à VIa de la Classification Périodique et d'autre part au moins un activateur choisi parmi les hydrures et les composés organo-métalliques des métaux des groupes I à III de la Classification Périodique, le raport molaire de l'activateur au composé de métal de transition étant compris entre 1 et 10,

b) une seconde étape de séparation du (co)polymère formé d'avec le(s) monomère(s) n'ayant pas réagi, sous une pression comprise entre 100 et 500 bars,

c) une troisième étape de recyclage de(s) monomère(s) n'ayant pas réagi, et

d) une quatrième étape de recompression jusqu'à la pression de (co)polymérisation,

caractérisé en ce que l'on introduit dans le milieu réactionnel, en fin de première étape, au moins un composé capable de réduire le métal ou les métaux de transition du système catalytique.

2. Procédé selon la revendication 1, caractérisé en ce que le composé capable de réduire le métal ou les métaux de transition du système catalytique est choisi parmi les dérivés organolithiens, organomagnésiens, organozinciques, organocadmiens, organomercuriques, et l'oxyde de carbone.

3. Procédé selon l'une des revendications 1 et 2, caractérisé en ce que le flux molaire du composé introduit est compris entre 0,2 et 6 fois le flux molaire du métal ou des métaux de transition du système catalytique.

4. Procédé selon l'une des revendications 2 et 3, caractérisé en ce que le dérivé organolithien est le butyllithium.

5. Procédé selon l'une des revendications 1 à 4, caractérisé en ce que l'on introduit en outre, lors de la 2$^e$ et/ou de la 3$^e$ étape, dans le courant de monomère(s) recyclé(s), et le cas échéant de (co)polymères formés, au moins un composé choisi parmi :

— les amides des acides organiques saturés ou insaturés comprenant de 12 à 22 atomes de carbone,
— les polyalkylènepolyols comprenant de 4 à 500 atomes de carbone,
— les composés comportant au moins 2 fonctions époxyde.

6. Procédé selon la revendication 5, caractérisé en ce que la quantité dudit composé est comprise entre 0,001 et 0,1 mole par tonne de monomère(s) recyclé(s).

7. Procédé selon l'une des revendications 5 et 6, caractérisé en ce que l'amide est choisi parmi l'érucamide, l'oléamide et le stéaramide.

8. Procédé selon l'une des revendications 5 et 6, caractérisé en ce que le polyalkylènepolyol est le polyéthylèneglycol de masse moléculaire comprise entre 200 et 10 000.

9. Procédé selon l'une des revendications 5 et 6, caractérisé en ce que le polyalkylènepolyol est le polypropylèneglycol de masse moléculaire comprise entre 250 et 4 000.

10. Procédé selon l'une des revendications 5 et 6, caractérisé en ce que le polyalkylènepolyol est un copolymère séquencé comprenant des motifs éthylèneglycol et des motifs propylèneglycol.

11. Procédé selon l'une des revendications 5 et 6, caractérisé en ce que le composé comportant au moins 2 fonctions époxyde est l'huile de soja époxydée.

**Claims**

1. A process for the continuous manufacture of homopolymers of ethylene and copolymers of ethylene with at least one α-olefin containing 3 to 8 carbon atoms, comprising :

(a) a first step of (co)polymerizing ethylene at a temperature between 180° and 320 °C and at a pressure between 300 and 2,500 bars, in the presence of a catalytic system comprising a halogenated compound of a transition metal from groups IVa to VIa of the Periodic System and at least one activator selected from the group consisting of hybrides and organometallic compounds of metals of Groups I to III of the Periodic System, the molar ratio of the activator to the transition metal compound in the catalytic system being between 1 and 10 ;

(b) a second step of separating in the reaction medium the polymers and copolymers formed from the unreacted monomers, under a pressure of between 100 and 500 bars ;

(c) a third step of recycling the unreacted monomers ; and

(d) a fourth step of recompressing unreacted monomers up to the polymerization pressure,

characterized by introducing into the reaction medium, at the end of the first step, a first compound capable of reducing the transition metal of the catalytic system.

2. A process according to claim 1, characterized in that the compound capable of reducing the transition metal of the catalytic system is selected from organolithium, organomagnesium, organozinc, organocadmium, organomercury derivatives, and carbon monoxide.

3. A process according to claim 1 or claim 2, characterized in that the first compound has a molar flowrate between 0.2 and 6 times the molar flowrate of the transition metal or metals of the catalytic system.

4. A process according to claims 2 and 3, wherein the organolithium derivative is butyllitium.

5. A process according to claims 1 to 4, characterized by further introducing, during the second step and/or the third step, into the stream of recycled monomer(s) and finally of (co)polymers formed, at least one compound selected from amides of saturated or unsaturated organic acids containing from 12 to 22 carbon atoms, polyalkylene polyols containing from 4 to 500 carbon atoms and compounds containing at least 2 epoxide functional units.

6. A process according to claim 5, characterized in that the amount of the said compound is between 0.001 and 0.1 mole per ton of recycled monomers.

7. A process according to one of claims 5 and 6, wherein the amide is selected from erucamide, oleamide and stearamide.

8. A process according to one of claims 5 and 6, characterized in that the polyalkylene polyol is polyethylene glycol having a molecular weight between 200 and 10,000.

9. A process according to one of claims 5 and 6, wherein the polyalkylene polyol is polypropylene glycol having a molecular weight between 250 and 4,000.

10. A process according to one of claims 5 and 6, characterized in that the polyalkylene polyol is a block copolymer comprising ethylene glycol units and propylene glycol units.

11. A process according to one of claims 5 and 6, characterized in that the compound containing at least 2 epoxide functional units is epoxidized soybean oil.

**Patentansprüche**

1. Verfahren zur kontinuierlichen Herstellung von Äthylenhomopolymeren oder Copolymeren von Äthylen und mindestens einem α-Olefin mit 3 bis 8 Kohlenstoffatomen, umfassend in Aufeinanderfolge :

a) einen ersten Schritt der (Co)Polymerisation des Äthylens bei einer Temperatur zwischen 180° und 320 °C, unter einem Druck zwischen 300 und 2 500 bar und in Gegenwart eines Katalysatorsystems, das einerseits mindestens eine Halogenverbindung eines Übergangsmetalls der Gruppen IVa bis VIa jdes Periodensystems und anderseits mindestens einen Aktivator ausgewählt aus den Hydriden und den organometallischen Verbindungen von Metallen der Gruppen I bis III des Perioodensystems enthält, wobei das Molverhältnis zwischen Aktivator und Übergangsmetallverbindung zwischen 1 und 10 beträgt,

b) einen zweiten Schritt der Trennung des gebildeten (Co)Polymers von dem (den) nicht zur Reaktion gelangten Monomer(en) unter einem Druck zwischen 100 und 500 bar,

c) einen dritten Schritt der Rückführung des (der) nicht zur Reaktion gelangten Monomer(s) (en) und

d) einen vierten Schritt der neuerlichen Verdichtung bis auf den (Co)Polymerisationdruck,

dadurch gekennzeichnet, daß man am Ende des ersten Schrittes in das Reaktionsmilieu mindestens eine Verbindung einbringt, die fähig ist, das bzw. die Übergangsmetall(e) des Katalysatorsystems zu reduzieren.

2. Verfahren nach Anspruch 1, dadurch gekennzeichnet, daß die zur Reduktion des Übergangsmetalls bzw. der Übergangsmetalle des Katalysatorsystems fähige Verbindung ausgewählt wird aus den Derivaten von Organolithium, von Organomagnesium, von Organozink, und von Organokadmium, von Organoquecksilber sowie Kohlenoxid.

3. Verfahren nach Anspruch 1 oder 2, dadurch gekennzeichnet, daß der Molfluß der eingebrachten Verbindung zwischen dem 0,2 und 6 fachen Molfluß des Übergangsmetalls bzw. der Übergangsmetalle des Katalysatorsystems liegt.

4. Verfahren nach Anspruch 2 oder 3, dadurch gekennzeichnet, daß das Derivat von Organolithium Butyllithium ist.

5. Verfahren nach einem der Ansprüche 1 bis 4, dadurch gekennzeichnet, daß man weiters während des 2. und/oder 3. Schrittes in den Strom des rückgeführten Monomers bzw. der rückgeführten Monomeren und gegebenenfalls der gebildeten (Co)Polymere mindestens eine Verbindung einbringt, die ausgewählt ist aus : — den Amiden gesättiger oder ungesättiger organischer Säuren mit 12 bis 22 Kohlenstoffatomen, — den Polyalkylentpolyolen mit 4 bis 500 Kohlenstoffatomen, und — den mindestens 2 Epoxidfunktionen beinhaltenden Verbindungen.

6. Verfahren nach Anspruch 5, dadurch gekennzeichnet, daß die Menge der genannten Verbindung zwischen 0,001 und 0,1 Mol pro Tonne rückgeführten Monomeres bzw. rückgeführter Monomere beträgt.

7. Verfahren nach Anspruch 5 oder 6, dadurch gekennzeichnet, daß das Amid ausgewählt wird, aus der Gruppe bestehend aus Erucasäureamid, Ölsäureamid und Stearinsäureamid.

8. Verfahren nach Anspruch 5 oder 6, dadurch gekennzeichnet, daß das Polyalkylenpolyol Polyäthylenglykol mit einer Molekularmasse zwischen 200 und 10 000 ist.

9. Verfahren nach Anspruch 5 oder 6, dadurch gekennzeichnet, daß das Polyalkylenpolyol Polypropylenglycol mit einer Molekularmasse zwischen 250 und 4 000 ist.

10. Verfahren nach Anspruch 5 oder 6, dadurch gekennzeichnet, daß das Polyalkylenpolyol ein Äthylenglykoleinheiten und Propylenglykoleinheiten enthaltendes Blockcopolymerisat ist.

11. Verfahren nach Anspruch 5 oder 6, dadurch gekennzeichnet, daß die mindestens 2 Epoxidfunktionen beinhaltende Verbindung epoxydiertes Sojaöl ist.

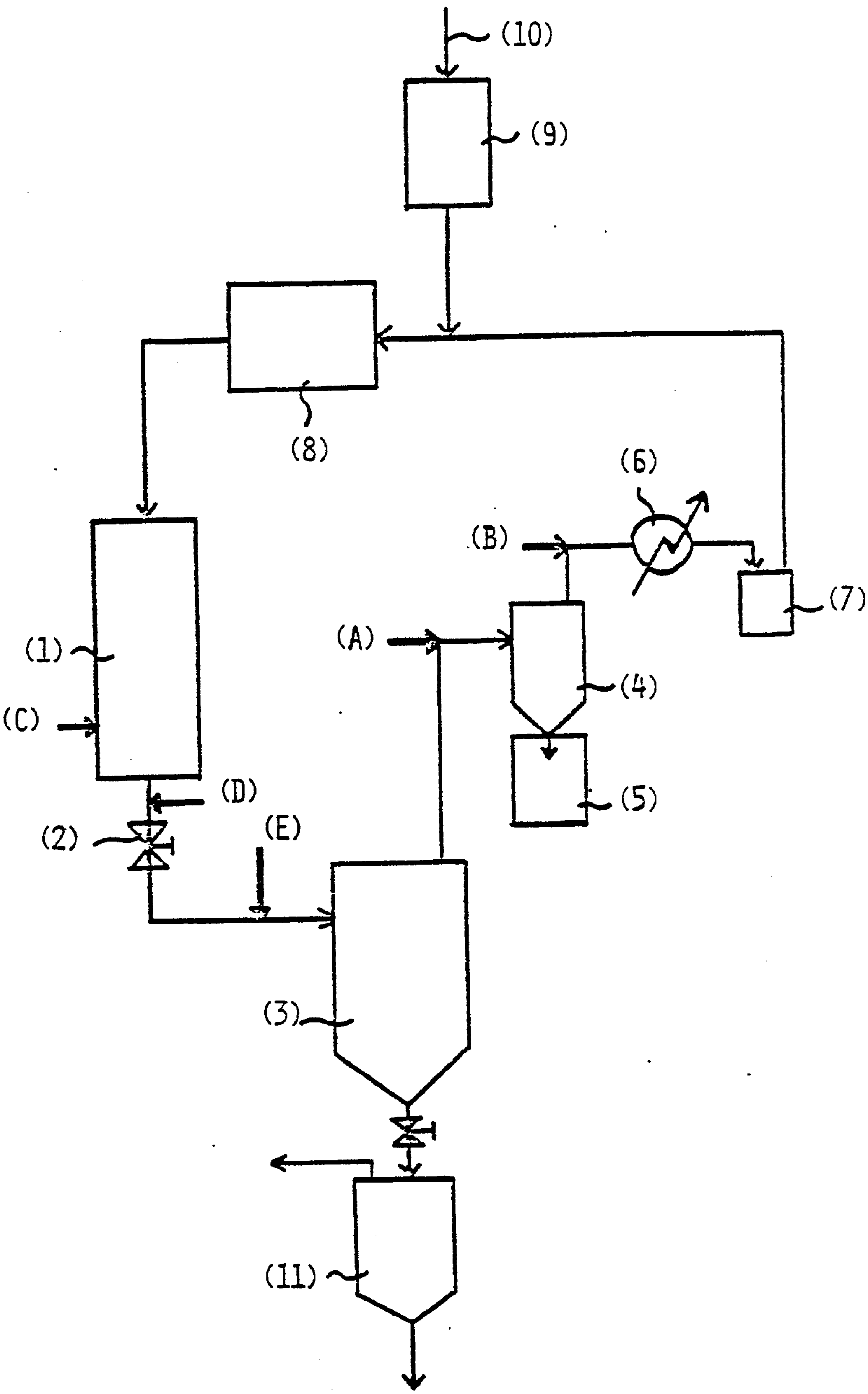
(10)
(9)
(8)
(6)
(B)
(7)
(A)
(1)
(4)
(C)
(5)
(D)
(2)
(E)
(3)
(11)